Europäisches Patentamt

European Patent Office

Office européen des brevets

(19)

(11) Veröffentlichungsnummer: **0 100 023**
**B1**

(12) EUROPÄISCHE PATENTSCHRIFT

(45) Veröffentlichungstag der Patentschrift:
**20.04.88**

(51) Int. Cl.⁴: **B 25 B 23/142**

(21) Anmeldenummer: **83106852.3**

(22) Anmeldetag: **13.07.83**

(54) **Drehmomentschlüssel.**

(30) Priorität: **28.07.82 DE 3228086**

(43) Veröffentlichungstag der Anmeldung:
**08.02.84 Patentblatt 84/6**

(45) Bekanntmachung des Hinweises auf die Patenterteilung:
**20.04.88 Patentblatt 88/16**

(84) Benannte Vertragsstaaten:
**DE FR GB IT SE**

(56) Entgegenhaltungen:
**EP - A - 0 007 288**
**FR - A - 2 497 347**
**US - A - 4 006 629**

**ELECTROTECHNOLOGY, Band 4, Nr. 4, Oktober 1976,
Seiten 3-6, The Institution of Electrical and Electronics
Technician Engineers, London, GB; R.F. RUSS:
"Strain-gauges and strain-gauged devices"**

(73) Patentinhaber: **Jomi Trust Reg., Werdenbergerweg 11,
FL-9490 Vaduz (LI)**

(72) Erfinder: **Pohl, Peter, Dipl.-Ing., Eichenstrasse 14,
D-4006 Erkrath 2 (DE)**

(74) Vertreter: **Mentzel, Norbert, Dipl.-Phys. et al,
Patentanwälte Dipl.-Phys. Buse Dipl.-Phys. Mentzel
Dipl.-Ing. Ludewig Unterdörnen 114,
D-5600 Wuppertal 2 (DE)**

EP 0 100 023 B1

## Beschreibung

Die Erfindung bezieht sich auf einen Drehmomentschlüssel zum Aufbringen und/oder Messen einer vorbestimmten Vorspannung auf die Schäfte von in Werkstücke eingezogenen Schrauben, insbesondere Dehnschrauben, bestehend aus einem Hebelarm, an dessen einem Hebelende eine Angriffsstelle für den Schraubenkopf bzw. die Schraubenmutter angeordnet und dessen anderes Hebelende als Handhabe ausgebildet ist, der Hebelarm einen beim bestimmungsgemässen Gebrauch sich elastisch biegenden Bereich aufweist, wo zwei in Längsrichtung des Hebelarmes, in Abstand zueinander angeordnete Dehnungsmessstreifen befestigt und die Dehnungsmessstreifen in einer Wheatstone-Messbrücke geschaltet sind und einem die Messwerte digital angebenden Anzeigegerät (Display).

Bei diesem aus der US-PS 4 006 629 bekannten Drehmomentschlüssel sind am Biegestab vier Dehnungsmessstreifen vorgesehen, und zwar zwei auf der einen Seite des Biegestabes und zwei auf der anderen Seite des Biegestabes. Jeweils die beiden Dehnungsmessstreifen, die auf der gleichen Seite des Biegestabes vorgesehen sind, weisen in Längsrichtung des Biegestabes unterschiedliche Abstände zu der Angriffsstelle für den Schraubenkopf bzw. der Schraubenmutter auf. Die vier Dehnungsmessstreifen bilden die vier Widerstände einer Wheatstone-Brücke, die im Ausschlagverfahren betrieben wird. Solange der Drehmomentschlüssel unbelastet ist, soll die Querspannung der Messbrücke gleich Null sein. Temperaturbedingte Längenänderungen des Biegestabes wirken symmetrisch auf die auf beiden Seiten des Biegestabes vorgesehenen Dehnungsmessstreifen, so dass eine Änderung der Querspannung der Messbrücke nicht eintreten dürfte. Beim bestimmungsgemässen Gebrauch des Drehmomentschlüssels wird der Biegestab elastisch gebogen, so dass an der einen Seite des Biegestabes die beiden Dehnungsmessstreifen gelängt und auf der anderen Seite des Biegestabes die beiden Dehnungsmessstreifen gestaucht werden. Durch dieses Längen und Stauchen der Dehnungsmessstreifen verändern sich die elektrischen Widerstände, und es entsteht eine Querspannung in der Messbrücke, die von Null abweicht. Diese Querspannung der Messbrücke wird dann über einen entsprechenden Wandler dem die Messwerte digital angebenden Anzeigegerät zugeführt. Bei diesem bekannten Drehmomentschlüssel muss jedoch während seiner gesamten Benutzungszeit die Messbrücke, der Wandler und das Anzeigegerät unter Strom stehen, so dass ein verhältnismässig grosser Stromverbrauch eintritt und ein Netzanschluss vorgesehen sein muss. Bei einer netzunabhängigen Benutzung des Drehmomentschlüssels sind grosse, umfangreiche Batterien erforderlich. Beim bekannten Drehmomentschlüssel wird weiterhin als nachteilig empfunden, dass nach einer Montage der vier Dehnungsmessstreifen an dem Biegestab ein Abgleichen, Justieren od.dgl. nicht mehr möglich ist. Die Fertigungsmasse des Biegestabes und der Dehnungsmessstreifen weisen Toleranzen auf. Ebenso ist auch das Anbringen der Dehnungsmessstreifen an dem Biegestab mit Toleranzen versehen. Diese toleranzbedingten Abweichungen können sich addieren und somit Messfehler hervorrufen, die nicht ausgeglichen werden können. Zu den mit Toleranzen versehenen Fertigungsmassen der Dehnungsmessstreifen gehört auch der Proportionalitätsfaktor K, der das Verhältnis zwischen der Längenänderung zur entsprechenden Widerstandsänderung angibt.

Der Erfindung liegt die Aufgabe zugrunde, einen Drehmomentschlüssel der eingangs erläuterten Art zu schaffen, bei dem solche Nachteile vermieden sind und in einfacher und wohlfeiler Weise mit geringem Stromverbrauch eine genaue Messung des Drehmomentes möglich ist, wobei der Gebrauchszweck erweitert und eine Justierung möglich ist.

Diese Aufgabe wird erfindungsgemäss dadurch gelöst, dass jeder der beiden Dehnungsmessstreifen, voneinander unabhängig, in je einer eigenen Messbrücke angeordnet ist und die Querspannungen der beiden Messbrücken je für sich verstärkt und über einen Schalter je einem Messwertspeicher und von dort taktweise, abwechselnd über einen Analog-Digital-Wandler (AD-Converter) einem Mikroprozessor zuführbar sind und der Mikroprozessor das Anzeigegerät steuert. Die Verknüpfung der mit den beiden Dehnungsmessstreifen ermittelten Messergebnisse erfolgt somit erst in einem Mikroprozessor, da die beiden Dehnungsmessstreifen, voneinander unabhängig, in je einer eigenen Messbrücke angeordnet sind. Die Querspannungen der beiden Messbrücken werden je für sich verstärkt. Die Verstärkung ist dabei verstellbar, so dass eine genaue Einstellung möglich ist. Die beiden je für sich verstärkten Messwerte gelangen zu einem Messwertspeicher. Die gespeicherten Messwerte werden dann taktweise nacheinander vom Analog-Digital-Wandler erfasst und dem Mikroprozessor zugeführt und erst in diesem Mikroprozessor miteinander verknüpft, um dann die genaue Grösse des Drehmomentes in dem Anzeigegerät anzugeben.

Die beiden Messbrücken können vom Mikroprozessor gesteuert taktweise, jeweils für den Zeitraum von 15 bis 200 Mikrosekunden über Transistoren mit Strom beaufschlagbar sein. Das Messen des Drehmomentes erfolgt somit in einfacher Weise in Intervallen, wobei jeweils der eigentliche Messzeitraum sehr kurz ist. Der Stromverbrauch für die Messung ist somit sehr gering.

Die Taktfolge der Messungen kann sich beim bestimmungsgemässen Gebrauch durch die Anzeige des sich schnell ändernden Messwertes vom Mikroprozessor gesteuert erhöhen. Die Messintervalle sind somit veränderbar und passen sich automatisch dem Bedarf an. Solange der Messwert konstant bleibt, werden nur wenige Messungen pro Zeiteinheit durchgeführt, während beim Eingang sich unterscheidender Messwerte die Anzahl der Messungen pro Zeiteinheit erhöht wird. Auch hierdurch wird der Stromverbrauch verringert, da die meisten Messungen nur dann durchgeführt werden, wenn die Drehmomentschlüssel bestimmungsgemäss in Gebrauch ist. Auch dann erfolgt die eigentliche Messung nur sehr kurzzeitig.

Die beiden Messbrücken können bei einer Null-Drehmomentmessung eine Querspannung aufweisen die etwa der Hälfte der vom AD-Wandler zu verarbeitenden Maximal-Spannung entspricht und bei der Drehmomentmessung in der einen Drehrichtung die Spannungswerte zwischen etwa $^1/_2$ und etwa $^1/_1$ und bei einer Drehmomentmessung in der anderen Richtung die Spannungswerte zwischen etwa $^1/_2$ und etwa 0 erfasssen. Dadurch können in einfacher Weise im Anzeigegerät positive und negative Drehmomente angezeigt werden.

Die vom AD-Wandler zu verarbeitende Maximal-Spannung kann etwa 2,5 Volt betragen. Diese Spannung reicht aus, um eine einwandfreie Messung durchführen zu können. Bei Messen eines Null-Drehmomentes beträgt die Querspannung an den Messbrücken etwa 1,25 Volt.

Bei einer Null-Drehmomentmessung kann der Ist-Wert der Querspannung der Messbrücken mit dem Soll-Wert vergleichbar sein und Abweichungen bei der eigentlichen Messung von positiven oder negativen Drehmomenten als Korrekturwert im Mikroprozessor Verwendung finden. Hiermit findet in einfacher Weise eine Null-Korrektur statt, auch in den Fällen, in denen die Dehnungsmessstreifen sich temperaturbedingt ausdehnen oder zusammenziehen sollten.

Die Messwerte von Messreihen können im Mikroprozessor miteinander verknüpfbar sein und der Mittelwert der Messreihe ist auf Abfrage anzeigbar. Mit dem Mikroprozessor sind somit in besonders einfacher Weise Messreihen zusammenstellbar, wobei die einzelnen gemessenen Werte miteinander verglichen und ein Mittelwert auf Abfrage anzeigbar ist.

Die Messwerte von Messreihen können auch im Mikroprozessor miteinander verknüpfbar sein und der Höchstwert der Messreihe ist auf Abfrage anzeigbar. Auch hierbei werden in einfacher Weise die gemessenen Messwerte miteinander verglichen und der Höchstwert kann auf Abfrage angezeigt werden.

Das Erreichen eines einzustellenden mit Plus- und Minustoleranzen versehenen Sollwertes des aufzubringenden Drehmomentes kann optisch und/oder akustisch anzeigbar sein. Durch ein optisches und/oder akustisches Signal wird somit dem Benutzer aufgezeigt, wenn das eingestellte Toleranzfeld erreicht ist.

In vorteilhafter Weise kann die Verknüpfung der Messwerte im Mikroprozessor derart sein, dass lediglich die im Toleranzfeld liegenden Ist-Werte erfasst werden.

Bei einem Überschreiten des einzustellenden Höchstwertes des aufzubringenden Drehmomentes kann durch das erforderliche Rückdrehen dieser zu hoch liegende Messwert aus der Messwertverknüpfung zur Ermittlung des Höchstwertes und/oder Mittelwertes einer Messreihe entfernbar sein. Bei einem Überschreiten des einzustellenden Höchstwertes des aufzubringenden Drehmomentes muss der Benutzer durch entgegengesetztes Drehen des Drehmomentschlüssels die zu hohe Schraubenspannung lösen. Durch dieses Drehen des Drehmomentschlüssels in der entgegengesetzten Richtung wird dieser zu hoch liegende Messwert aus der Messwertverknüpfung gelöscht, so dass er keinen Einfluss auf die Ermittlung des Mittelwertes einer Messreihe bewirkt.

Mit dem Mikroprozessor gesteuert kann die zu den Messbrücken gehende Spannung und damit der Messbereich verändert werden. Mit dem Mikroprozessor kann somit in einfacher Weise der Messbereich des Drehmomentschlüssels verändert werden.

Mit dem Mikroprozessor gesteuert kann auch die Verstärkung der Querspannungen der Messbrücken und damit der Messbereich verändert werden. Somit kann ebenfalls in einfacher Weise durch eine Veränderung der Verstärkung der Querspannungen der Messbereich verändert werden.

Mit dem Mikroprozessor kann auch noch eine Umrechnung und Umschaltung auf unterschiedliche Masseinheiten durchgeführt werden. Durch Umstellen können somit in einfacher Weise die Masseinheiten Meterkilogramm, Newtonmeter u. dgl. benutzt werden.

Auf der Zeichnung ist die Erfindung in einem Ausführungsbeispiel dargestellt, und zwar zeigen:

Fig. 1 einen erfindungsgemässen Drehmomentschlüssel in schaubildlicher Darstellung,

Fig. 2 den Biegestab des Drehmomentschlüssels in schematischer Darstellung mit einem Diagramm des Drehmomentes und

Fig. 3 den Schaltplan des Drehmomentschlüssels.

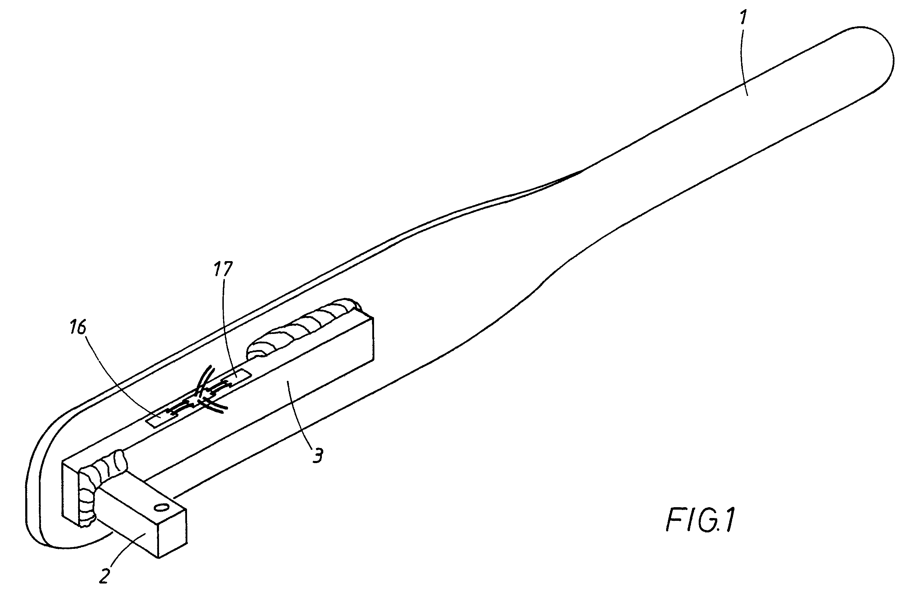

Der in der Fig. 1 dargestellte Drehmomentschlüssel dient zum Aufbringen und/oder Messen einer vorbestimmten Vorspannung auf die Schäfte von in Werkstücke eingezogenen Schrauben, insbesondere Dehnschrauben. Die Werkstücke und die Schrauben sind dabei der Einfachheit halber nicht näher dargestellt. Der Drehmomentschlüssel besteht aus einem Hebelarm, der als Biegestab 3 dient. An dem einen Ende des Biegestabes 3 ist eine Angriffsstelle in Form eines Vierkantzapfens 2 für den Schraubenkopf bzw. die Schraubenmutter angeordnet. Auf den Vierkantzapfen 2 ist dabei in bekannter Weise eine nicht näher dargestellte Nuss aufzustecken, die eine Ausnehmung für ein formschlüssiges Aufsetzen auf den Schraubenkopf bzw. auf die Schraubenmutter aufweist. An dem anderen Ende des Biegestabes 3 ist der Handgriff 1 vorgesehen. Beim dargestellten Ausführungsbeispiel besteht der Handgriff 1 aus einem Flacheisen, welches am Biegestab 3 durch Schweissen befestigt ist. Der Handgriff kann natürlich auch von einer angeformten Verlängerung des Biegestabes 3 gebildet sein.

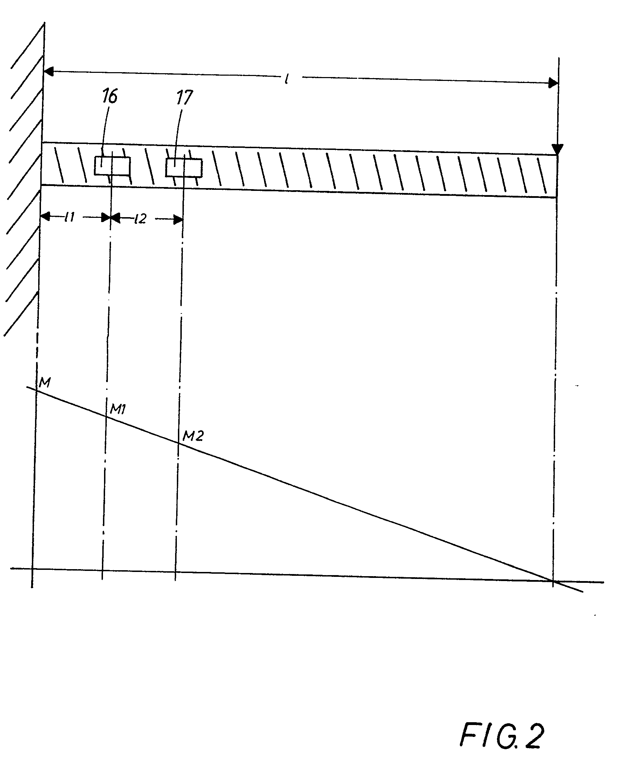

An dem Biegestab 3 sind zwei Dehnungsmessstreifen 16 und 17 befestigt. Die Dehnungsmessstreifen 16, 17 sind dabei an der Seite des Biegestabes 3 vorgesehen, die sich beim bestimmungsgemässen Gebrauch des Drehmomentschlüssels streckt oder staucht, je nach der Drehrichtung des Drehmomentschlüssels. Die beiden Dehnungsmessstreifen 16, 17 sind dabei in Längsrichtung des Biegestabes 3 in Abstand zueinander angeordnet. Aus der Fig. 2 ist ersichtlich, dass der Dehnungsmessstreifen 16 mit dem Abstand l1 zur Längsmittellinie des Vierkantzapfens angeordnet ist, wobei die Längsmittellinie des Vierkantzapfens 2 den Drehpunkt des Drehmomentschlüssels darstellt. Der Dehnungsmessstreifen 17 ist mit dem Abstand l2 zum Dehnungsmessstreifen 16 angeordnet. Aus noch zu erläuternden Gründen werden zweckmässigerweise die Abstände derart bemessen, dass l1 = l2 ist.

Die mit dem Dehnungsmessstreifen 16 bzw. 17 gemessene Streckung bzw. Stauchung der äusseren Faser vom Biegestab 3 ist proportional der Biegung und die Biegung abhängig vom aufgebrachten Drehmoment, dem Elastizitätsmodul und dem Trägheitsmoment. Da beim Aufbringen einer Kraft auf den Handgriff eines Drehmomentschlüssels der Hebelarm, der Elastizitätsmodul und das Trägheitsmoment unverändert bleiben, kann somit anhand der Durchbiegung das erzielte Drehmoment gemessen werden. Bei der Benutzung eines einzigen Dehnungsmessstreifens 16 entspricht das Drehmoment des Drehmomentschlüssels dem Produkt aus dem mit dem Dehnungsmessstreifen 16 gemessenen Drehmoment M1 und l/l–l1). l ist dabei die Gesamtlänge des Hebelarmes bis zum Angriffspunkt der Kraft l1 der Abstand zwischen dem benutzten Dehnungsmessstreifen und dem Drehpunkt des Drehmomentschlüssels. Da der Abstand zwischen dem Drehpunkt des Drehmomentschlüssels und der einwirkenden Kraft die Genauigkeit der Messung beeinflusst, ist es nötig, dass die Kraft an derselben Stelle des Handgriffes einwirkt, für die die Eichung vorgenommen wurde.

Diese geschilderten Nachteile lassen sich durch den Einsatz eines zweiten Dehnungsmessstreifens 17 im Abstand l2 zum ersten Messstreifen 16 vermeiden, wenn man den an dieser Stelle gemessenen Wert mit dem Messwert des ersten Dehnungsmessstreifens 16 verknüpft.

In der Fig. 2 ist der Drehmomentverlauf über einen einseitig eingespannten Balken (Biegestab) dargestellt. Die durch die beiden Dehnungsmessstreifen 16 und 17 ermittelten Drehmomente sind mit M1 und M2 bezeichnet. Der Dehnungsmessstreifen 16 ist im Abstand l1 von der Einspannstelle (Schraube, Mutter) angebracht, der Dehnungsmessstreifen 17 im Abstand l1+l2 zur Einspannstelle. Dann gilt für das Drehmoment an der Einspannstelle M = M1+(l1/l2) (M1–M2). Für den speziellen Fall, bei dem l1 = l2 ist gilt dann M = 2 M1–M2. Damit lässt sich das Drehmoment an der Einspannstelle unabhängig vom Kraftangriffspunkt ermitteln.

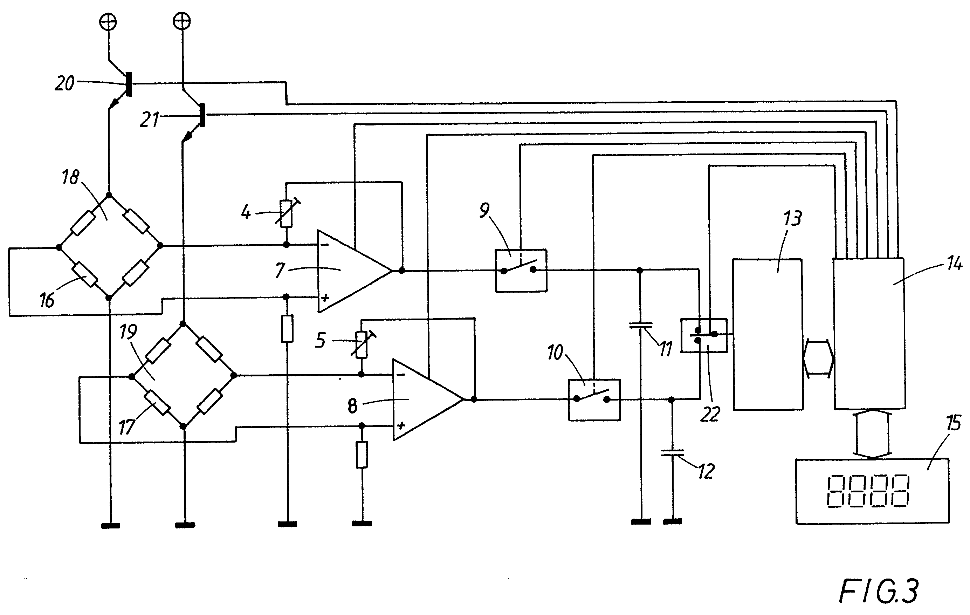

In der Fig. 3 ist das Schaltbild dargestellt. Der Dehnungsmessstreifen 16 ist als Widerstand zusammen mit drei weiteren Widerständen in einer Messbrücke 18 eingesetzt. Der Dehnungsmessstreifen 17 ist als Widerstand zusammen mit drei weiteren Widerständen in einer zweiten Messbrücke 19 eingesetzt. Die beiden Dehnungsmessstreifen 16 und 17 sind somit, voneinander unabhängig, in je einer eigenen Messbrücke 18 bzw. 19 angeordnet. Die Querspannung der Messbrücke 18 führt zu einem Verstärker 7 und die Querspannung der Messbrücke 19 zu einem Verstärker 8. Der Verstärker 7 kann dabei mit einem Potentiometer 4 und der Verstärker 8 mit einem Potentiometer 5 geregelt werden. Mit diesen Potentiometern 4 und 5 ist eine genaue Einstellung möglich, auch wenn das Widerstandsmoment und damit auch das Trägheitsmoment des Biegestabes 3 toleranzbedingt Abweichungen aufweist. Ebenso kann auch der Proportionalitätsfaktor K der Dehnungsmessstreifen 16 und 17 toleranzbedingt Abweichungen aufweisen. Der Proportionalitätsfaktor K ist das Verhältnis zwischen relativer Längendehnung und Widerstandsänderung an jedem Dehnungsmessstreifen 16, 17. Eine fehlerhafte Anbringung der Dehnungsmessstreifen 16, 17 an dem Biegestab 3, d.h. eine Änderung der Abstände l1 und l2 kann durch die Potentiometer ebenfalls abgeglichen werden.

Die von der Messbrücke 18 kommende Querspannung gelangt über den Verstärker 7 zu einem Schalter 9 und über den Schalter 9 zu einem Messwertspeicher 11, der von einem Kondensator gebildet ist. Die von der Messbrücke 19 kommende Querspannung gelangt über den Verstärker 8 zu dem Schalter 10 und über den Schalter zu einem Messwertspeicher 12, der ebenfalls von einem Kondensator gebildet ist. Über einen Schalter 22 können die in den Messwertspeichern 11, 12 gespeicherten Messwerte abwechselnd, nacheinander einem Analog-Digital-Wandler 13 (AD-Converter) zugeführt werden. Der Analog-Digital-Wandler steht in Verbindung mit einem Mikroprozessor 14 und der Mikroprozessor 14 mit einem die Messwerte digital angebenden Anzeigegerät 15. Der Mikroprozessor steuert dabei den Schalter 22 und die Schalter 9 und 10 und auch die Verstärker 7 und 8. Der Mikroprozessor 14 steuert weiterhin zwei Transistoren 20, 21, mit denen den beiden Messbrücken 18, 19 taktweise, jeweils für den Zeitraum von etwa 15 bis 200 Mikrosekunden mit Strom beaufschlagbar sind. Beim bestimmungsgemässen Gebrauch des Drehmomentschlüssels werden die Messungen sehr kurzzeitig durchgeführt, so dass sehr wenig Strom verbraucht wird. Da die Messzeiten verhältnismässig sehr kurz sind, können etwa 20 Messungen pro Sekunde durchgeführt werden, ohne dass ein wesentlicher Stromverbrauch eintritt. Die Taktfolge der Messungen kann sich beim bestimmungsgemässen Gebrauch durch die Anzeige des sich schnell ändernden Messwertes vom Mikroprozessor 14 gesteuert erhöhen. Sobald beim Drehmomentschlüssel die Messwerte sich nicht ändern, wird somit die Taktfolge wesentlich verlangsamt, so dass dann kaum ein Stromverbrauch eintritt.

Die Messbrücken werden jeweils nur für Bruchteile des eigentlichen Messzyklus durch die Transistoren 20 und 21 eingeschaltet und ihr Messwert in den Messwertspeichern 11 und 12 gespeichert. Dadurch wird auch während des eigentlichen Messvorganges und nicht nur in Messpausen der Stromverbrauch stark reduziert. Durch die Speicherung der gemessenen und in den Verstärkern 7 und 8 verstärkten Messspannungen ist es möglich, die bei den Messungen gewonnenen Werte durch den AD-Wandler 13 und den Mikroprozessor 14 nacheinander zu verarbeiten. Die Messbrücken 18, 19 brauchen nicht während der gesamten Wandlungszeit des relativ langsamen AD-Wandlers 13 eingeschaltet bleiben. Als AD-Wandler 13 wird zweckmässigerweise ein langsamer Wandler benutzt, da dieser stromsparend arbeitet. Bei Messpausen ist auch der AD-Wandler 13 vom Mikroprozessor 14 abschaltbar.

Gespeichert werden Messspannungen dadurch, dass während der Einschaltzeit der Messbrücken 18, 19 die Schalter 9 und 10 vom Mikroprozessor 14 durchgeschaltet sind und die Kondensatoren 11 und 12 aufgeladen werden. Vor dem Abschalten der Messbrücken 18, 19 werden die Schalter 9 und 10 durch den Mikroprozessor wieder geöffnet. Während des Aufladens der Kondensatoren 11 und 12 ist der Schalter 22 offen. Nur in der Zeit des Abfragens der Messwertspeicher ist der Schalter 22 in der einen oder der anderen Einschaltstellung und stellt somit eine kurzzeitige Verbindung mit dem AD-Wandler 13 her. Zum weiteren Stromsparen können auch die Verstärker 7 und 8 zwischen den Messzyklen ausgeschaltet werden.

In vorteilhafter Weise können die beiden Messbrücken 18, 19 bei einer Null-Drehmomentmessung eine solche Querspannung aufweisen, die etwa der Hälfte der vom AD-Wandler 13 zu verarbeitenden Maximal-Spannung entpsricht. Bei einer Drehmomentmessung in der einen Drehrichtung erfassen die Spannungswerte dann den Bereich zwischen etwa $^1/_2$ und etwa $^1/_1$ und bei einer Drehmomentmessung in der anderen Drehrichtung die Spannungswerte zwischen etwa $^1/_2$ und etwa 0. Auf diese Weise werden in einfacher Weise positive und negative Drehmomente, d.h. Drehmomente in der einen und in der anderen Drehrichtung, aufgezeigt. Die vom AD-Wandler 13 zu verarbeitende Maximal-Spannung beträgt etwa 2,5 Volt. Bei der Messung eines Drehmomentes in der Grössenordnung von Null erhält der AD-Wandler 13 von den Messbrücken 18, 19 eine Querspannung von etwa 1,25 Volt.

Bei einer Null-Drehmomentmessung kann der Ist-Wert der Querspannung der Messbrücken 18, 19 mit dem Soll-Wert vergleichbar sein und Abweichungen bei der eigentlichen Messung von positiven oder negativen Drehmomenten als Korrekturwert im Mikroprozessor Verwendung finden. Temperaturbedingte Längenänderungen der Dehnungsmessstreifen 16, 17 werden somit in einfacher Weise automatisch ausgeglichen. Die Messwerte von Messreihen können im Mikroprozessor 14 miteinander verknüpft werden, so dass der Mittelwert und/oder der Höchstwert der Messreihe auf Abfrage anzeigbar ist.

Weiterhin ist es auch möglich, das Erreichen eines einzustellenden mit Plus- und Minustoleranzen versehenen Soll-Wertes des aufzubringenden Drehmomentes optisch und/oder akustisch anzuzeigen. Damit wird dem Benutzer optisch und/oder akustisch das Erreichen des eingestellten Toleranzfeldes angezeigt. Sobald die untere Grenze erreicht wird, leuchtet beispielsweise ein nicht näher dargestelltes grünes Lämpchen auf. Wird das Toleranzfeld überschritten, so kann ein ebenfalls nicht näher dargestelltes rotes Lämpchen aufleuchten. Während des Durchfahrens des Toleranzfeldes kann auch noch ein akustisches Signal gegeben werden. Vor dem bestimmungsgemässen Gebrauch des Drehmomentschlüssels kann der Benutzer das Toleranzfeld zum Soll-Wert nach oben und unten unterschiedlich in Prozenten eingeben.

Bei einem Überschreiten des einzustellenden Höchstwertes des aufzubringenden Drehmomentes kann durch das erforderliche Rückdrehen dieser zu hoch liegende Messwert aus der Messwertverknüpfung zur Ermittlung des Höchstwertes und/oder Mittelwertes einer Messreihe entfernt werden. Sobald der Benutzer mit dem Drehmomentschlüssel ein zu hohes Drehmoment auf die Schraube aufgebracht hat, muss er durch Rückdrehen die Schraube wieder lösen. Durch dieses Rückwärtsdrehen des Drehmomentschlüssels wird der zu hoch liegende Messwert aus der Messwertverknüpfung gelöscht, so dass er auf die Ermittlung des Mittelwertes einer Messreihe keinen Einfluss hat. Natürlich ist es auch möglich, nur solche Ist-Werte im Mikroprozessor 14 miteinander zu verknüpfen, die im Toleranzfeld liegen. Alle anderen Werte, auch die in entgegengesetzter Drehrichtung liegenden Werte, werden nicht erfasst.

Mit dem Mikroprozessor 14 kann die zu den Messbrücken 18, 19 gehende Spannung verändert und damit der Messbereich verändert werden. Eine Messbereichsänderung kann auch dadurch erreicht werden, dass vom Mikroprozessor 14 gesteuert die Verstärkung der Querspannungen der Messbrücken 18, 19 abgeändert wird. Mit dem Mikroprozessor 14 kann auch zugleich eine Umrechnung und Umschaltung auf unterschiedliche Masseinheiten durchgeführt werden. Als Masseinheiten können dabei Meterkilogramm und Newtonmeter Verwendung finden. Ebenso ist auch eine Umrechnung in das englische Masssystem möglich.

Wie bereits erwähnt, ist die dargestellte Ausführung lediglich eine beispielsweise Verwirklichung der Erfindung und diese nicht darauf beschränkt. Vielmehr sind noch mancherlei andere Ausführungen und Abänderungen möglich.

**Patentansprüche**

1. Drehmomentschlüssel zum Aufbringen und/oder Messen einer vorbestimmten Vorspannung auf die Schäfte von in Werkstücke eingezogenen Schrauben, insbesondere Dehnschrauben, bestehend aus einem Hebelarm, an dessen einem Hebelende eine Angriffsstelle für den Schraubenkopf bzw. die Schraubenmutter angeordnet und dessen anderes Hebelende als Handhabe ausgebildet ist, der Hebelarm einen beim bestimmungsgemässen Gebrauch sich elastisch biegenden Bereich aufweist, wo zwei in Längsrichtung des Hebelarmes, in Abstand zueinander angeordnete Dehnungsmessstreifen befestigt und die Dehnungsmessstreifen in einer Wheatstone-Messbrücke geschaltet sind und einem die Messwerte digital angebenden Anzeigegerät, dadurch gekennzeichnet, dass jeder der beiden Dehnungsmessstreifen (16, 17), voneinander unabhängig, in je einer eigenen Messbrücke (18 oder 19) angeordnet ist und die Querspannungen der beiden Messbrücken (18, 19) je für sich verstärkt und über einem Schalter (9, 10) je einen Messwertspeicher (11, 12) und von dort taktweise, abwechselnd über einem Analog-Digital-Wandler (13) einem Mikroprozessor (14) zuführbar sind und der Mikroprozessor (14) das Anzeigegerät (15) steuert.

2. Drehmomentschlüssel nach Anspruch 1, dadurch gekennzeichnet, dass die beiden Messbrükken (18, 19) vom Mikroprozessor (14) gesteuert, taktweise, jeweils für den Zeitraum von 15 bis 200 Mikrosekunden über Transistoren (20, 21) mit Strom beaufschlagbar sind.

3. Drehmomentschlüssel nach Anspruch 1 oder 2, dadurch gekennzeichnet, dass die Taktfolge der Messungen sich beim bestimmungsgemässen Gebrauch durch die Anzeige des sich schnell ändernden Messwertes vom Mikroprozessor (14) gesteuert erhöht.

4. Drehmomentschlüssel nach einem der Ansprüche 1 bis 3, dadurch gekennzeichnet, dass die beiden Messbrücken (18, 19) bei einer Null-Drehmomentmessung eine Querspannung aufweisen, die etwa die Hälfte der vom AD-Wandler (13) zu verarbeitenden Maximal-Spannung entspricht und bei einer Drehmomentmessung in der einen Drehrichtung die Spannungswerte zwischen etwa $^1/_2$ und etwa $^1/_1$ und bei einer Drehmomentmessung in der anderen Drehrichtung die Spannungswerte zwischen etwa $^1/_2$ und etwa 0 erfassen.

5. Drehmomentschlüssel nach Anspruch 4, dadurch gekennzeichnet, dass die vom AD-Wandler (13) zu verarbeitende Maximal-Spannung etwa 2,5 Volt beträgt.

6. Drehmomentschlüssel nach einem der Ansprüche 1 bis 5, dadurch gekennzeichnet, dass bei einer Null-Drehmomentmessung der Ist-Wert der Querspannung der Messbrücken (18, 19) mit dem Soll-Wert vergleichbar und Abweichungen bei der eigentlichen Messung von positiven oder negativen Drehmomenten als Korrekturwert im Mikroprozessor (14) Verwendung finden.

7. Drehmomentschlüssel nach einem der Ansprüche 1 bis 6, dadurch gekennzeichnet, dass die Messwerte von Messreihen im Mikroprozessor (14) miteinander verknüpfbar sind und der Mittelwert der Messreihe auf Abfrage anzeigbar ist.

8. Drehmomentschlüssel nach einem der Ansprüche 1 bis 7, dadurch gekennzeichnet, dass die Messwerte von Messreihen im Mikroprozessor (14) miteinander verknüpfbar sind und der Höchstwert der Messreihe auf Abfrage anzeigbar ist.

9. Drehmomentschlüssel nach einem der Ansprüche 1 bis 8, dadurch gekennzeichnet, dass das Erreichen eines einzustellenden mit Plus- und Minustoleranzen versehenen Sollwertes des aufzubringenden Drehmomentes optisch und/oder akustisch anzeigbar ist.

10. Drehmomentschlüssel nach einem der Ansprüche 7 bis 9, dadurch gekennzeichnet, dass lediglich die im Toleranzfeld liegenden Ist-Werte im Mikroprozessor (14) miteinander verknüpfbar sind.

11. Drehmomentschlüssel nach einem der Ansprüche 1 bis 10, dadurch gekennzeichnet, dass bei einem Überschreiten des einzustellenden Höchstwertes des aufzubringenden Drehmomentes durch das erforderliche Rückdrehen dieser zu hoch liegende Messwert aus der Messwertverknüpfung zur Ermittlung des Höchstwertes und/oder Mittelwertes einer Messreihe entfernbar ist.

12. Drehmomentschlüssel nach einem der Ansprüche 1 bis 11, dadurch gekennzeichnet, dass mit dem Mikroprozessor (14) gesteuert die zu den Messbrücken (18, 19) gehende Spannung und damit der Messbereich veränderbar ist.

13. Drehmomentschlüssel nach einem der Ansprüche 1 bis 11, dadurch gekennzeichnet, dass mit dem Mikroprozessor (14) gesteuert die Verstärkung der Querspannungen der Messbrücken (18, 19) und damit der Messbereich veränderbar ist.

14. Drehmomentschlüssel nach einem der Ansprüche 1 bis 13, dadurch gekennzeichnet, dass mit dem Mikroprozessor (14) eine Umrechnung und Umschaltung auf unterschiedliche Masseinheiten durchführbar ist.

**Claims**

1. A torque wrench for applying and/or measuring a predetermined prestress to the shanks of screws which are tightened into workpieces, in particular necked-down screws, comprising a lever arm wherein arranged at one lever end thereof is an engagement means for the screw head or the screw nut while the other lever end thereof is in the form of a handle, the lever arm has a region which elastically bends in use as directed, where two strain gauges which are arranged at a spacing from each other in the longitudinal direction of the lever arm are fixed and the strain gauges are connected in a Wheatstone measuring bridge, and a display means for digitally giving the measurement values, characterised in that each of the two strain gauges (16, 17) is arranged independently of each other in its own respective measuring bridge (18 or 19) and the transverse voltages of the two measuring bridges (18, 19) are each amplified in themselves and can be supplied by way of a switch (9, 10), to a respective measurement value storage means (11, 12) and from there cyclically alternately by way of an analog-digital converter (13) to a microprocessor (14), and the microprocessor (14) controls the display means.

2. A torque wrench according to claim 1, characterised in that, controlled by the microprocessor (14), the two measuring bridges (18, 19) can be cyclically supplied with current respectively for a period of from 15 to 200 microseconds by way of transistors (20, 21).

3. A torque wrench according to claim 1 or claim 2 characterised in that the cycle sequence of the measurements, in use as directed, is increased under the control of the microprocessor (14), by way of the display of the rapidly changing measurement value.

4. A torque wrench according to one of claims 1 to 3 characterised in that, in the case of a zero torque measurement operation, the two measuring bridges (18, 19) have a transverse voltage which approximately corresponds to half the maximum voltage to be processed by the AD-converter (13) and, in a torque measuring operation in the one direction of rotation, the voltage values comprise between about $1/2$ and about $1/1$ and in a torque measuring operation in the other direction of rotation the voltage values comprise between about $1/2$ and about 0.

5. A torque wrench according to claim 4 characterised in that the maximum voltage to be processed by the AD-converter (13) is about 2.5 volts.

6. A torque wrench according to one of claims 1 to 5 characterised in that, in a zero torque measuring operation, the actual value of the transverse voltage of the measuring bridges (18, 19) is comparable to the reference value and deviations in the actual measurement of positive or negative torques are used as a correction value in the microprocessor (14).

7. A torque wrench according to one of claims 1 to 6 characterised in that the measurement values of measurement series can be related together in the microprocessor (14) and the mean value of the measurement series can be displayed upon interrogation.

8. A torque wrench according to one of claims 1 to 7 characterised in that the measurement values of measurement series can be related together in the microprocessor (14) and the highest value of the measurement series can be displayed upon interrogation.

9. A torque wrench according to one of claims 1 to 8 characterised in that the attainment of a reference value which is to be set, provided with plus and minus tolerances, in respect of the torque to be applied, can be displayed optically and/or accoustically.

10. A torque wrench according to one of claims 7 to 9 characterised in that only the actual values in the tolerance range can be related together in the microprocessor (14).

11. A torque wrench according to one of claims 1 to 10 characterised in that, when the highest value to be set in respect of the torque to be applied is exceeded, by virtue of the necessary return rotary movement, that excessively high measurement value can be removed from the combination of measurement values for ascertaining the highest value and/or mean value of a measurement series.

12. A torque wrench according to one of claims 1 to 11 characterised in that, controlled by the microprocessor (14), the voltage going to the measuring bridges (18, 19) and therewith the measuring range can be altered.

13. A torque wrench according to one of claims 1 to 11 characterised in that, controlled by the microprocessor (14), the amplification of the transverse voltages of the measuring bridges (18, 19) and therewith the measuring range can be altered.

14. A torque wrench according to one of claims 1 to 13 characterised in that conversion and switching over to different measurement units can be carried out with the microprocessor (14).

**Revendications**

1. Clé dynamométrique servant à appliquer et/ou à mesurer une tension préalable prédéterminée sur les tiges de boulons passant dans des pièces, en particulier de boulons à allongement, constituée d'un bras de levier, à l'une des extrémités duquel est disposée une partie d'attaque destinée à la tête du boulon ou à l'écrou et dont l'autre extrémité constitue une poignée, le bras de levier présentant une zone qui se courbe élastiquement au cours d'une utilisation conforme aux prescriptions, zone dans laquelle deux jauges extensométriques sont fixées à distance l'une de l'autre, dans la direction longitudinale du bras de levier, et dans laquelle les jauges extensométriques sont montées dans un pont de Wheatstone, et d'un appareil d'affichage indiquant numériquement les valeurs mesurées, caractérisée en ce que chacune des deux jauges extensométriques (16, 17) est montée indépendamment l'une de l'autre dans un pont de mesure (18 ou 19) qui lui est propre et les tensions transversales des deux ponts de mesure (18, 19) sont amplifiées séparément chacune et sont agencées de façon à pouvoir être envoyées chacune, via un interrupteur (9, 10), dans une mémoire de valeurs mesurées (11, 12) et de là, alternativement en cadence, dans un microprocesseur (14) via un convertisseur analogique/numérique (13), et en ce que le microprocesseur (14) commande l'appareil d'affichage (15).

2. Clé dynamométrique selon la revendication 1, caractérisée en ce que, sous la commande du microprocesseur (14), les deux ponts de mesure (18, 19) sont agencés de façon à être alimentés en courant en cadence chaque fois pendant un laps de temps de 15 à 200 microsecondes, via des transistors (20, 21).

3. Clé dynamométrique selon la revendication 1 ou 2, caractérisée en ce que, lors d'une utilisation conforme aux prescriptions, le rythme des mesures est accéléré sous la commande du microprocesseur (14), par l'indication d'une variation rapide de la valeur mesurée.

4. Clé dynamométrique selon l'une des revendications 1 à 3, caractérisée en ce que les deux ponts de mesure (18, 19) présentent, à la mesure d'une valeur nulle du couple, une tension latérale qui est à peu près égale à la moitié de la tension maximale à traiter par le convertisseur analogique/numérique (13), et saisissent, pour une mesure du couple dans un sens de rotation, des valeurs de tension entre environ $^1/_2$ et environ $^1/_1$, et, pour une mesure du couple dans l'autre sens de rotation, des valeurs de tension entre $^1/_2$ et environ 0.

5. Clé dynamométrique selon la revendication 4, caractérisée en ce que la tension maximale à traiter par le convertisseur analogique/numérique (13) est égale à 2,5 volts environ.

6. Clé dynamométrique selon l'une des revendications 1 à 5, caractérisée en ce que, pour une valeur nulle de couple, la valeur effective de la tension transversale des ponts de mesure (18, 19) est comparable à la valeur nominale et les écarts trouvent leur emploi comme valeur de correction dans le microprocesseur (14) pour la mesure proprement dite de couples positifs ou négatifs.

7. Clé dynamométrique selon l'une des revendications 1 à 6, caractérisée en ce que les valeurs mesurées de séries de mesures peuvent être combinées ensemble dans le microprocesseur (14) et la valeur moyenne de la série de mesures est affichable à la demande.

8. Clé dynamométrique selon l'une des revendications 1 à 7, caractérisée en ce que les valeurs mesurées de séries de mesures peuvent être combinées ensemble dans le microprocesseur (14) et la valeur maximum de la série de mesures est affichable à la demande.

9. Clé dynamométrique selon l'une des revendications 1 à 8, caractérisée en ce que l'atteinte d'une valeur nominale à sélectionner du couple à appliquer, affectée de tolérances en plus ou en moins, peut être signalée optiquement et/ou acoustiquement.

10. Clé dynamométrique selon l'une des revendications 7 à 9, caractérisée en ce que seules les valeurs effectives situées dans la zone de tolérance sont combinées ensemble dans le microprocesseur (14).

11. Clé dynamométrique selon l'une des revendications 1 à 10, caractérisée en ce que, lors d'un dépassement de la valeur maximale à sélectionner du couple à appliquer, il est possible de faire disparaître, par la rotation en arrière requise, cette valeur mesurée trop élevée de la combinaison de valeurs mesurées, en vue de déterminer la valeur maximum et/ou la valeur moyenne d'une série de mesures.

12. Clé dynamométrique selon l'une des revendications 1 à 11, caractérisée en ce que, sous la commande du microprocesseur (14), la tension qui parvient aux ponts de mesure (18, 19) et, par conséquent, la zone de mesure peuvent être modifiées.

13. Clé dynamométrique selon l'une des revendications 1 à 11, caractérisée en ce que, sous la commande du microprocesseur (14), l'amplification des tensions transversales des ponts de mesure (18, 19) et, par conséquent, la zone de mesure peuvent être modifiées.

14. Clé dynamométrique selon l'une des revendications 1 à 13, caractérisée en ce qu'il est possible de réaliser, à l'aide du microprocesseur (14), une conversion numérique et un passage à des unités de mesure différentes.

0 100 023

FIG.1

FIG. 2

FIG.3

0 100 023